# FASCICULE DE BREVET EUROPEEN

(11) **EP 0 516 813 B1**
(45) Date de publication et mention de la délivrance du brevet: **14.10.1998**
(21) Numéro de dépôt: 92902960.1
(22) Date de dépôt: 20.12.1991
(51) Int. Cl.: G11B 7/085, G11B 7/09

(54) **DISPOSITIF D'ASSERVISSEMENT POUR DISQUE OPTIQUE**
SERVOVORRICHTUNG FÜR OPTISCHE PLATTE
CONTROL DEVICE FOR OPTICAL DISKS

(30) Priorité: 21.12.1990 FR 9016135
(43) Date de publication de la demande: 09.12.1992
(73) Titulaire: ART TECH GIGADISC ATG, 31047 Toulouse (FR)
(72) Inventeur: BEC, Daniel, F-92045 Paris La-Défense Cédex (FR); LE MERER, Jean-Pierre, F-92045 Paris-La Défense Cédex 67 (FR); LEBLANC, Michèle, F-92045 Paris-La Défense Cédex 67 (FR)
(74) Mandataire: Simonnot, Bernard
(86) Numéro de dépôt international: FR9101051
(87) Numéro de publication internationale: WO9211632

(56) Documents cités:
- EP-A- 0 287 235
- EP-A- 0 326 374
- EP-A- 0 379 757
- JP-A-58 003 142
- JP-A-58 194 147
- JP-A-63 224 038
- US-A- 4 922 477
- US-A- 4 958 335

## Description

La présente invention concerne un dispositif d'accès et d'asservissement à une piste portée par un support d'information lisible et/ou enregistrable optiquement par un rayonnement focalisé. Le dispositif comporte un circuit magnétique fixe comportant un noyau central dans les entrefers duquel se déplacent au moins deux bobines permettant de réaliser respectivement un accès et un suivi radial de piste ainsi que la focalisation du rayonnement sur la piste le noyau central étant muni d'une gorge longitudinale recevant au moins une partie de la tête optique, les bobines étant combinées autour du noyau de manière à laisser un passage pour ladite tête. Un tel dispositif est connu par le document (patent abstract of Japan, Vol 13, N°19, P-814, N° de publication JP 63224038).

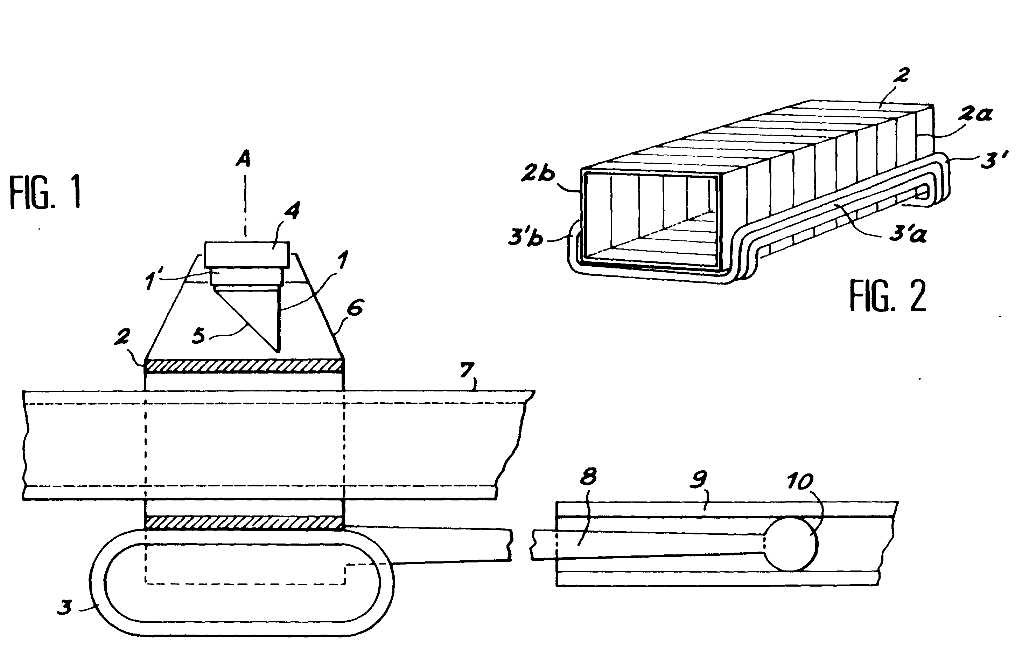

La demande de brevet français N°8908800 déposée le 30 juin 1989 au nom de ART TECH GIGADISC "ATG", publié le 4 janvier 1991 sous le numéro de publication FR-A-2 649 238, décrit également un dispositif d'accès et d'asservissement pour disque optique. Dans cette demande de brevet, l'on a décrit un

dispositif d'accès et d'asservissement à une piste portée par un support d'informations lisibles et/ou enregistrables optiquement par un rayon focalisé tel qu'un disque optique, qui présente une structure la plus légère et la plus compacte possible. De ce fait, les éléments du dispositif d'accès et d'asservissement tels que la tête optique et les deux bobines associées aux dispositifs-moteurs permettant de réaliser respectivement l'accès et le suivi radial ainsi que la focalisation sont fixés rigidement les uns avec les autres de manière à former un seul équipage mobile compact se déplaçant dans les entrefers des circuits magnétiques. Ainsi, comme représenté sur la figure 1, le dispositif d'accès et d'asservissement décrit dans le brevet français N°89 08800 comporte essentiellement au moins une tête optique 1 qui sera décrite plus en détail ci-après, une première bobine 2 d'accès et de suivi radial et une deuxième bobine 3 de focalisation. Cet ensemble forme un équipage compact. En effet, comme représenté sur la figure 1, la tête optique 1 est constituée plus particulièrement par un élément cylindrique 1' portant à son extrémité supérieure un objectif de focalisation 4 et à son extrémité inférieure un miroir de renvoi 5 destiné à réfléchir le faisceau issu de la source laser vers le disque optique non représenté. L'axe A de la tête est placé orthogonalement au plan du disque. Cette tête 1 est fixée sur un élément support rigide 6 qui est solidarisé avec la bobine 2. Cette bobine 2 peut se déplacer en translation dans l'entrefer d'un premier circuit magnétique fixe. Pour simplifier le dessin, seul un noyau central 7 du premier circuit magnétique fixe à été représenté. De manière connue, ce noyau 7 est sécant à tous les sillons ou tours du disque optique et s'étend sur une longueur égale à au moins la longueur utile d'enregistrement augmentée de la longueur de l'ensemble compact mobile. Ce premier circuit magnétique en association avec la bobine 2 forme donc le premier dispositif moteur permettant l'accès et le suivi de piste. D'autre part, comme représenté sur la figure 1, en dessous de la bobine 2 est fixée par l'intermédiaire d'un système de fixation tel que des équerres ou des éléments rigides non représentés, une bobine 3 utilisée pour réaliser la focalisation. Cette bobine 3 peut se déplacer dans l'entrefer d'un deuxième circuit magnétique, non représenté sur la figure 1, qui, en association avec la bobine 3, forme le deuxième dispositif-moteur permettant la focalisation. D'autre part, comme représenté sur la figure 1, l'ensemble compact comporte un dispositif anti-tangage 8 qui est constitué, dans le mode de réalisation représenté, par une glissière 9 dans laquelle peut coulisser une tige 10 fixée à une extrémité sur l'ensemble compact et portant à son autre extrémité des moyens spécifiques d'anti-tangage dont la forme correspond à la forme de la glissière 9.

Comme représenté sur les figures 1 ou 2, la bobine 2 peut être constituée par un bâti cylindrique d'axe parallèle à un rayon du disque sur lequel est bobiné au moins un conducteur dont les spires sont dirigées, dans leur partie active, selon l'axe optique de la tête. Dans le mode de réalisation représenté sur la figure 1, la bobine 3 est constituée par une bobine plate de forme sensiblement elliptique. Cette bobine comporte des conducteurs dirigés perpendiculairement à l'axe optique A de la tête optique 1.

Pour simplifier et rendre plus compact l'équipage mobile, on a aussi proposé dans la demande de brevet français N°89 08800 une solution n'utilisant qu'un seul circuit magnétique pour réaliser les deux dispositifs d'accès et de suivi radial ainsi que de focalisation. Dans ce cas, on utilise une bobine 2 d'accès et d'asservissement radial ainsi qu'une bobine 3' de focalisation telles que représentées sur la figure 2. La bobine 2 est sensiblement identique à la bobine 2 de la figure 1. Dans ce cas, la bobine 2 est une bobine auto-porteuse obtenue par bobinage d'un conducteur selon un cylindre, la rigidité de la bobine étant assurée par le seul collage des différentes spires. Toutefois, la bobine 2 pourrait aussi être réalisée par bobinage sur une carcasse cylindrique. Les côtés 2a et 2b représentent les parties actives du conducteur ou des conducteurs de la bobine 2. La bobine 3' est alors constituée par une bobine plate pliée en U de manière à venir s'emboîter sous la bobine 2 d'accès. Dans ce cas, les parties 3'a et 3'b sont les portions actives du conducteur ou des conducteurs de la bobine 3'. Un exemple de construction similaire dans lequel la tête optique, les bobines d'accès et de suivi de piste, et la bobine de focalisation sont solidaires est divulgué dans JP-A-58003142 (Patent abstract of Japan, vol. 7, no. 73, (P-186), 25-03-93).

Avec les bobines décrites ci-dessus, on ne fonctionne qu'avec un circuit magnétique. Toutefois, ce type de bobines présente un certain nombre d'inconvénients. Le collage des deux bobines est difficile à réaliser. D'autre part, la bobine inférieure n'étant fixée que par un film de colle à la bobine 2, on observe des phénomènes de résonance. De plus, pour maintenir ces résonances à une fréquence suffisamment élevée, on doit utiliser des fils en aluminium qui sont de mise en oeuvre plus délicate que des fils de cuivre.

La présente invention a pour but de remédier à ces inconvénients en proposant un premier perfectionnement au dispositif d'accès et d'asservissement pour disque optique décrit dans la demande de brevet français N°89 08800, plus particulièrement un perfectionnement au mode de réalisation des bobines.

En conséquence, la présente invention a pour objet un dispositif d'accès et d'asservissement à une piste portée par un support d'informations lisibles et/ou enregistrables optiquement par un rayonnement focalisé, cette piste formant sur le support des tours régulièrement espacés ou à espacement variable, les tours formant une spirale ou se présentant sous forme d'éléments circulaires concentriques, ledit dispositif comportant une tête optique d'axe optique orthogonal au plan dudit support comprenant un objectif de focalisation et un miroir de renvoi, un circuit magnétique fixe comportant au moins un noyau central sécant à l'ensemble des tours de la piste, dans les entrefers duquel se déplacent deux bobines permettant de réaliser respectivement l'accès et le suivi radial de piste ainsi que la focalisation du rayonnement sur la piste, le noyau central étant muni d'une gorge longitudinale recevant au moins une partie de la tête optique, les bobines étant combinées autour du noyau de manière à laisser un passage pour la dite tête, l'objectif de focalisation, le miroir de renvoi et les bobines étant solidaires les uns des autres de façon à former un ensemble compact.

Selon un mode de réalisation préférentiel, les deux bobines sont disposées selon un arrangement symétrique, l'accès et le suivi radial souhaité étant obtenu par addition de forces F et F' induites par des courants circulant dans les bobines.

Selon un autre mode de réalisation préférentiel, les conducteurs actifs des deux bobines sont perpendiculaires entre eux et forment un angle de 45° par rapport à l'axe optique. De ce fait, les bobines qui sont placées dans le même champ magnétique subissent des efforts perpendiculaires entre eux, mais dans des directions à 45° par rapport aux bobines précédentes. Ces bobines permettent un fonctionnement dans un entrefer unique comme les bobines représentées sur la figure 2, mais elles sont réalisées avec des spires planes ce qui facilite leur construction. L'une de ces bobines est alimentée par la somme de deux courants, l'autre par la différence de ces deux mêmes courants. L'un des courants appartient à la boucle d'asservissement de suivi radial, l'autre à la boucle d'asservissement de focalisation.

D'autre part, selon une autre caractéristique, les conducteurs des deux bobines sont bobinés sur une carcasse cylindrique creuse de manière à se déplacer sur le noyau du circuit magnétique. De ce fait, les conducteurs sont bobinés de manière rigide sur la carcasse, ce qui évite les résonances néfastes aux asservissements et donne une meilleure transmission des effets depuis les conducteurs jusqu'à la masse utile, à savoir la tête optique. Selon un autre avantage de ce mode de réalisation, on peut utiliser des conducteurs en cuivre, car les bobines ne sont plus auto-porteuses.

La présente invention a aussi pour but de fournir un dispositif d'accès et d'asservissement à un disque optique qui permet de réaliser un meilleur suivi radial et un meilleur positionnement de la tête optique.

En conséquence et selon un mode de réalisation préférentiel l'ensemble compact est fixé à un dispositif de guidage par l'intermédiaire de moyens à deux degrés de liberté.

Selon un mode de réalisation, les moyens à deux degrés de libertés sont constitués par au moins une lame élastique verticale fixée à l'ensemble compact et par au moins une lame élastique horizontale reliant la première lame au dispositif de guidage.

Selon un autre mode de réalisation, les moyens à deux degrés de liberté sont constitués par au moins une lame élastique verticale fixée, d'une part à l'ensemble compact et, d'autre part, à une tige de guidage ainsi que par la tige de guidage. La lame élastique fournit une élasticité radiale; la tige permet, comme dans la demande de brevet 89 08800, un mouvement oscillant dans la direction de focalisation.

Bien entendu les mots "horizontal" et "vertical" ont été employés dans l'hypothèse où le disque optique lui-même est en position horizontale. L'homme de l'art n'aura aucune peine à les transposer si le disque occupe une orientation différente dans l'espace.

Ces modes de réalisation permettent de réaliser un dispositif de guidage guidé en frottement présentant une masse bien inférieure à celle de la tête de telle sorte que les oscillations parasites du dispositif de guidage lors de son déplacement, notamment ses à-coups de fonctionnement, ont peu d'effet sur la tête optique.

Cette fixation avec deux degrés de souplesse s'adapte aussi bien à un dispositif d'accès et d'asservissement mû par des bobines à 45° par rapport à l'axe optique qu'à un dispositif mû par des bobines classiques comme décrites dans la demande de brevet n° 89 08800.

D'autres caractéristiques et avantages de la présente invention apparaîtront à la lecture de la description de différents modes de réalisation, faite ci-après avec référence aux dessins ci-annexés dans lesquels :
- la figure 1, déjà décrite, est une vue en coupe longitudinale d'un dispositif d'accès et d'asservissement selon l'art antérieur ;
- la figure 2, déjà décrite, est une vue en perspective simplifiée d'un mode de réalisation des bobines utilisées dans le dispositif d'accès et d'asservissement de la figure 1 ;
- la figure 3 est une vue en perspective d'un mode de réalisation des bobines conforme à la présente invention, ce mode de réalisation pouvant être utilisé dans un dispositif d'accès et d'asservissement du type de celui représenté à la figure 1 ;
- la figure 4 est une vue en coupe simplifiée d'un dispositif d'accès et d'asservissement conforme à la présente invention utilisant les bobines de la figure 3 ;
- les figures 5A et 5B sont respectivement une vue en coupe et une vue en perspective représentant une variante de réalisation du dispositif d'accès et d'asservissement représenté aux figures 1 et 2 ;
- la figure 6A est une vue en perspective schématique représentant une autre variante de réalisation d'un dispositif d'accès et d'asservissement suivant l'invention ;
- la figure 6B est une vue en bout agrandie du dispositif de guidage du dispositif d'accès et d'asservissement suivant l'invention ;
- la figure 7A est une vue en perspective schématique représentant une troisième variante de réalisation d'un dispositif d'accès et d'asservissement suivant l'invention,
- la figure 7B une vue en perspective du système à deux degrés de liberté utilisé dans le dispositif d'accès et d'asservissement représenté sur la figure 7A ; et
- la figure 8 est une vue en perspective schématique représentant une quatrième variante de réalisation d'un dispositif d'asservissement et d'accès suivant l'invention.

Pour simplifier la description, sur les figures les mêmes éléments portent les mêmes références.

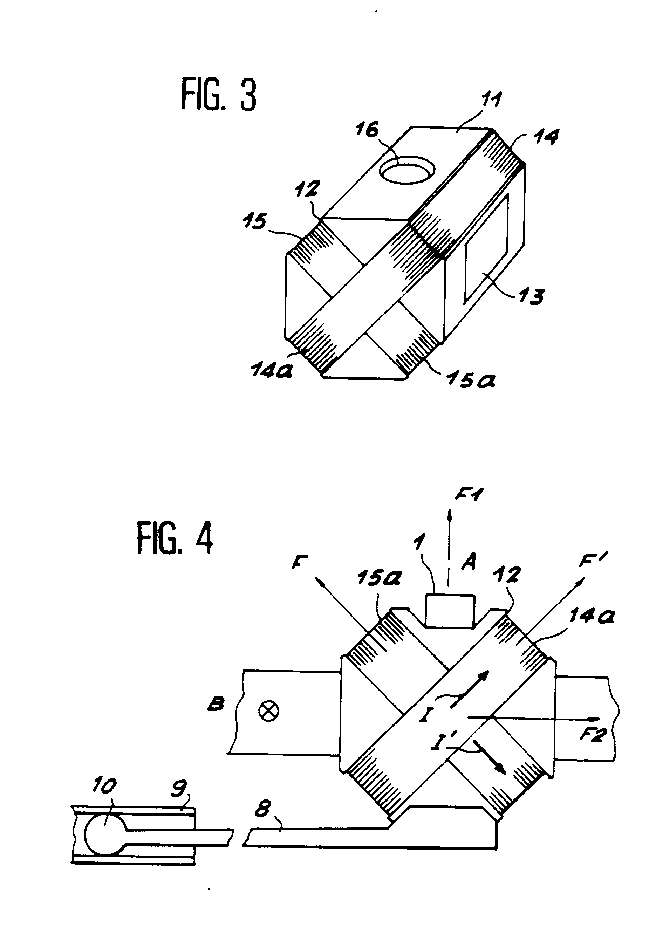

Sur les figures 3 et 4, on a représenté un autre mode de réalisation des bobines utilisées pour le dispositif-moteur réalisant l'accès et l'asservissement radial ainsi que pour le dispositif moteur réalisant la focalisation. Comme représenté plus particulièrement sur la figure 3, les deux bobines 14 et 15 sont réalisées sur une carcasse 11 de forme cylindrique. De préférence, cette carcasse présente en coupe la forme d'un polygone à huit côtés. Quatre côtés du polygone sont munis d'évidements 12 régulièrement répartis de telle sorte que deux évidements 12 soient diagonalement opposés.

Les deux bobines 14 et 15 sont obtenues en bobinant des fils réalisés par exemple en cuivre autour de la carcasse, en passant par les évidements 12 comme représentés sur les figures 3 et 4. De ce fait, les bobines présentent un arrangement symétrique, les conducteurs actifs 14a, 15a des deux bobines étant perpendiculaires entre eux et formant un angle de 45° par rapport à l'axe optique A. D'autre part, comme représenté sur les figures 3 et 4, la carcasse présente, dans deux des faces sans évidement, des ouvertures 13 permettant le passage du noyau central 7 du circuit magnétique et du faisceau optique. De plus, une ouverture 16 est prévue dans une face perpendiculaire aux faces contenant les ouvertures 13. Cette ouverture 16 permet le logement de la tête optique, comme cela sera décrit ci-après.

Avec la disposition décrite ci-dessus, les bobines 14 et 15 qui sont placées dans un même champ magnétique B subissent des efforts perpendiculaires entre eux mais dans des directions à 45° par rapport aux bobines décrites dans la demande de brevet N° 89 08800. Ainsi, comme représenté sur la figure 4, si la bobine 14 est parcourue par un courant I, du fait du champ magnétique B perpendiculaire au plan de la figure l'ensemble subira une force F selon la direction représentée sur la figure 4. De même, si la bobine 15 est parcourue par un courant I', l'équipage subira une force F'. Par addition vectorielle des deux forces F et F', on obtient donc la force causant le déplacement de l'équipage mobile compact constitué par les bobines 14, 15 et la tête optique 1, ce qui permet d'obtenir un asservissement de la tête aussi bien au niveau de la focalisation que de l'accès et du suivi radial. En effet, comme représenté sur la figure 4, la projection de la somme des forces F et F' suivant la direction de l'axe optique est une force F₁ permettant le déplacement de focalisation alors que la projection de cette même somme dans une direction radiale est une force F₂ permettant le déplacement d'accès et de suivi radial.

La disposition décrite ci-dessus permet donc d'obtenir tous les déplacements nécessaires à l'ensemble compact. Elle présente aussi les avantages décrits ci-dessous. Les fils des bobines 14 et 15 sont maintenus fermement dans les évidements 12 de la carcasse ce qui accroît la rigidité de l'ensemble et évite les phénomènes de résonance néfastes aux performances des asservissements. Ceci donne aussi une meilleure transmission des efforts depuis les conducteurs actifs 14a, 15a jusqu'à la masse utile, à savoir la tête optique : objectif de focalisation et miroir de renvoi du faisceau. D'autre part, avec cette disposition, il est possible d'utiliser des fils de cuivre alors que la disposition décrite avec référence à la figure 2 était réalisée avec des fils d'aluminium de mise en oeuvre plus délicate. Un avantage supplémentaire de la disposition décrite ci-dessus réside dans le fait que l'on loge les conducteurs plus facilement dans l'entrefer du circuit magnétique, car les fils sont plus ordonnés. Le système de guidage est identique à celui montré dans la figure 1.

On décrira maintenant un mode de réalisation du noyau central 7 permettant d'obtenir à la fois un ensemble compact et un circuit magnétique plus compacts que ceux de l'art antérieur. Dans ce cas comme représenté sur les figures SA et 5B, le noyau central 7 du circuit magnétique est muni d'un évidement 7' dans lequel vient se loger au moins une partie de la tête optique 1. Pour compenser cette perte de section du noyau central, on accroît légèrement sa hauteur, sans changer sa largeur; la hauteur de la bobine 2 est légèrement accrue mais le centre de gravité de l'équipage mobile compact se trouve rapproché du centre d'application des forces ce qui limite ses mouvements de balancement parasite. Pour permettre de loger au moins partiellement la tête optique dans le noyau de fer doux, on réalise la bobine 2 sous forme de deux bobines 2' et 2". Les nappes de courant utile sont alors 2'a, 2'b, 2"a, 2"b. Le reste du circuit magnétique comporte de manière connue une culasse 21 et deux aimants 22a et 22b. Cette solution présente l'avantage d'avoir à la fois un circuit magnétique et un équipage mobile plus compacts.

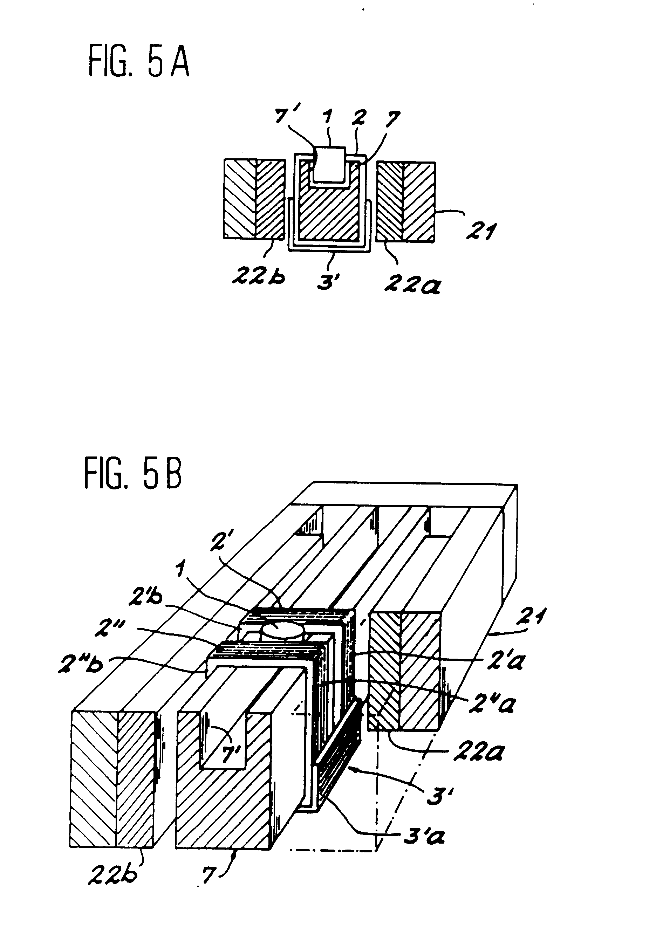

D'autre part, les modes de réalisation des figures 5A, et 5B ont été décrits en se référant à un arrangement de bobines du type de celui décrit avec référence à la figure 2. Toutefois, il est évident pour l'homme de l'art que la structure du noyau central peut aussi être utilisée avec une disposition de bobines telle que décrite avec référence aux figures 3 et 4 sans sortir du cadre de la présente invention.

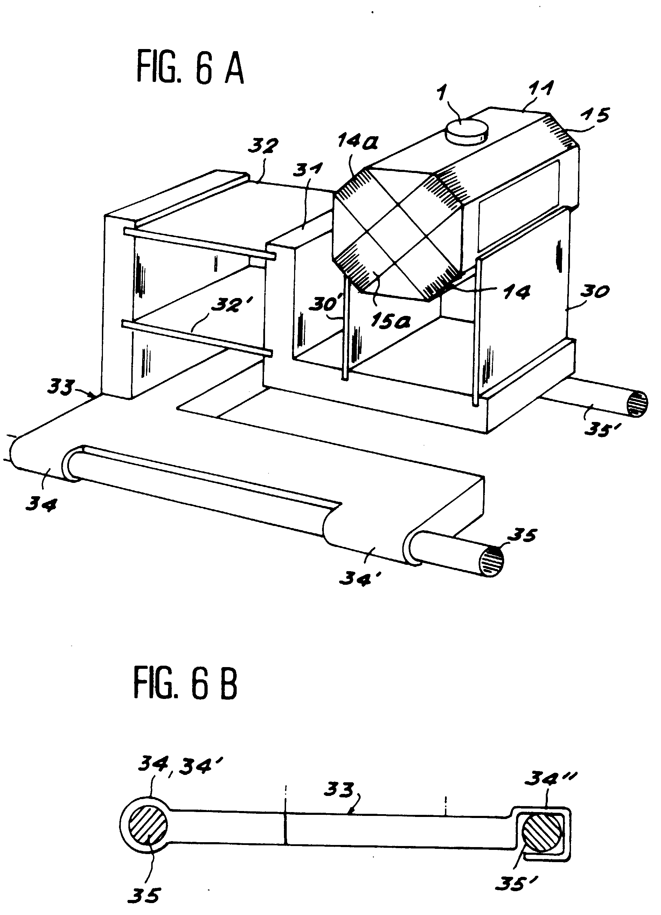

On décrira maintenant avec référence à la figure 6A un mode de fixation de l'ensemble compact constitué par la tête optique 1 et la carcasse 11 sur laquelle sont bobinées les bobines 14 et 15 à un dispositif de guidage 33 susceptible de se déplacer radialement par rapport à l'ensemble des tours de la piste du support-d'informations tel qu'un disque optique. De ce fait, le dispositif de guidage 33 est par exemple constitué d'un élément plan muni de colliers 34, 34' et d'un appui 34" susceptibles de se déplacer sur deux guides parallèles 35, 35'. Conformément à la présente invention, l'ensemble compact est fixé par l'intermédiaire de deux lames verticales élastiques 30, 30' sur une équerre 31, elle même fixée par deux lames élastiques horizontales 32, 32' au dispositif de guidage 33. Avec cette disposition, et en réalisant un dispositif de guidage 33 de masse très faible, présentant par exemple une masse inférieure à 1/5 fois la masse de l'ensemble de l'ensemble compact les à-coups du dispositif de guidage qui est guidé en glissement sec sur les guides 35 et 35', ont peu d'effets sur la carcasse 11 et la tête optique 1.

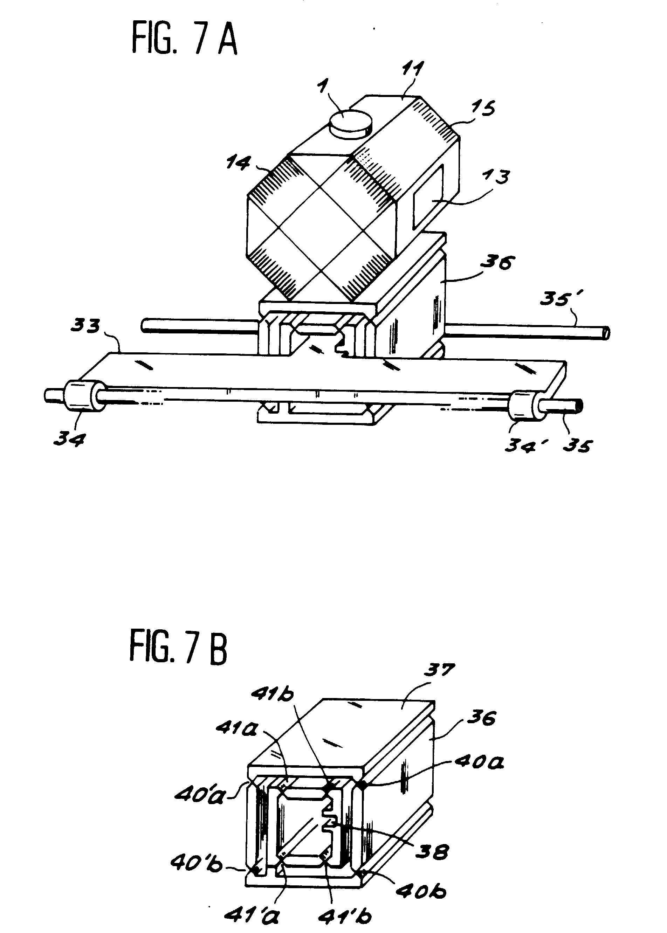

Une autre réalisation des deux couples de lames élastiques montrée sur la figure 7A, permet de réaliser cet ensemble de lames sous forme d'une pièce unique 36 en matière plastique moulée. Le dispositif d'accès et d'asservissement utilisant cette pièce 36 est par ailleurs similaire à celui montré sur la figure 6A; pour montrer cette similitude les mêmes références que celles de la figure 6A ont été utilisées pour la figure 7A.

la pièce unique 36 est reliée rigidement à la carcasse 11. Cette liaison s'effectue par exemple par collage de la face inférieure de la carcasse il à la face supérieure 37 de la pièce 36. Le corps du dispositif de guidage 33 est collé dans la nervure 38 de la pièce 36. Comme représenté figure 7B, la pièce 36 est composée de lames parallèles rigides reliées entre elles par des lignes de moindre résistance, obtenues en diminuant localement de façon importante l'épaisseur des lames parallèles. Les lignes 41a et 41b d'une part et 4l'a et 41'b d'autre part assurent une souplesse dans une direction verticale, la direction de focalisation. Les lignes 40a et 40b d'une part et 40'a et 40'b d'autre part assurent une souplesse dans une direction horizontale, la direction d'accès et de suivi radial. Ce mode de réalisation permet une fabrication et une mise en oeuvre très facile du bloc de lames.

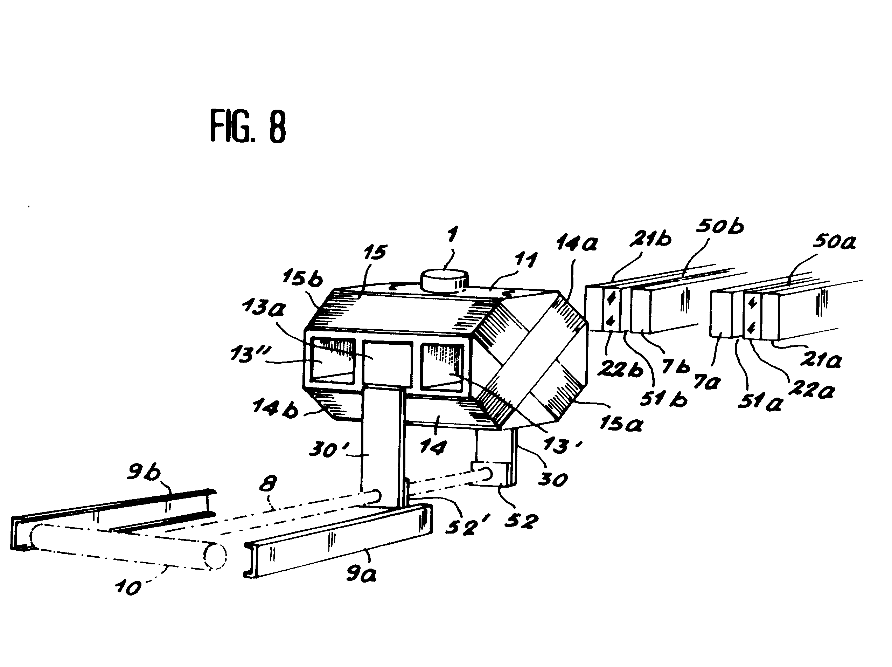

Une quatrième variante du dispositif d'accès, représenté figure 8, utilise pour assurer deux degrés de liberté, d'une part, deux lames verticales 30 et 30' assurant la souplesse dans la direction d'accès et de suivi radial et d'autre part une tige oscillante 8 en forme de T, assurant le déplacement dans la direction de focalisation grâce à une rotation ayant pour axe la génératrice de la tige 10 qui est en contact avec les bords des glissières en U 9a et 9b. Pour plus de clarté cette figure est représentée en éclaté; l'ensemble compact mobile étant séparé des pièces fixes, à savoir : le circuit magnétique 50a et 50b et les glissières de guidage 9a et 9b.

Dans la figure 8 le circuit magnétique représenté est double : il comporte un premier circuit magnétique 50a composé d'un noyau 7a, d'un aimant 22a et d'une culasse 21a et un second circuit magnétique 50b composé d'un noyau 7b, d'un aimant 22b et une culasse 21b.

L'induction magnétique dans l'entrefer 51a du circuit magnétique 50a interagit avec les nappes de fils 14a et 15a appartenant respectivement aux bobines 14 et 15. L'induction magnétique de l'entrefer 51b du circuit magnétique 50b interagit avec les nappes de fils 14b et 15b appartenant respectivement aux bobines 14 et 15.

Dans la carcasse 11 de l'équipage mobile sont pratiqués trois évidements. L'évidement 13a permet le passage du faisceau lumineux avant qu'il n'atteigne le miroir de renvoi puis l'objectif de la tête optique durant son trajet aller, ou après qu'il ait traversé l'objectif et se soit réfléchi sur le miroir de renvoi durant son trajet retour.

L'évidement 13' permet le passage du noyau 7a. Ses parois latérales ont un écartement tel que le noyau 7a y glisse à frottement doux. Sa hauteur est par contre suffisamment supérieure à celle du noyau 7a pour permettre les mouvements de focalisation nécessaires à l'ensemble compact. L'évidement 13" permet le passage du noyau 7b. Ses relations avec le noyau 7b sont les mêmes que celles de l'évidement 13' par rapport au noyau 7a. Ce frottement doux des noyaux 7a et 7b respectivement dans les évidements 13' et 13", associé au frottement doux des extrémités de la tige 10 au fond des glissières 9a et 9b permet de maintenir à un niveau acceptable les mouvements parasites de lacet de l'ensemble compact. Le frottement doux de la surface cylindrique de la tige 10 contre les deux branches de chacune des deux glissières en forme de U 9a et 9b permet de maintenir à un niveau acceptable les mouvements parasites de roulis de l'ensemble compact. Le mouvement de tangage est lui un mouvement utile : c'est le déplacement de focalisation.

La fixation des lames souples 30 et 30' sur la tige 8 est effectuée à l'aide de deux contre-plaques 52 et 52' rigidement fixées à la tige 8 afin de permettre un encastrement des lames 30 et 30' sur la tige 8. Cet encastrement n'est pas une obligation et un simple collage des lames 30 et 30' sur la tige 8, sans contreplaque 52 et 52' serait l'équivalent d'une articulation et permettrait de diminuer la hauteur des lames 30 et 30'. A leur autre extrémité les lames sont fixées sur la carcasse 11, soit rigidement (encastrement), soit souplement (articulation).

Il est évident pour l'homme de l'art que chacun de ces types de fixation à deux degrés de liberté peut être utilisé avec tous les ensembles compacts tel que décrits dans la demande de brevet français N°89 08800 ou dans le brevet français n° 2 522 860.

## Revendications

1. Dispositif d'accès et d'asservissement à une piste portée par un support d'informations lisibles et/ou enregistrables optiquement par un rayonnement focalisé, cette piste formant sur le support des tours régulièrement espacés ou à espacement variable, les tours formant une spirale ou se présentant sous forme d'éléments circulaires concentriques, ledit dispositif comportant une tête optique (1) d'axe optique orthogonal au plan dudit support comprenant un objectif de focalisation (4) et un miroir de renvoi (5), au moins un circuit magnétique (21) fixe comportant un noyau central (7) sécant à l'ensemble des tours de la piste et dans les entrefers duquel se déplacent au moins deux bobines (2', 2", 3' ou 14, 15) permettant de réaliser respectivement l'accès et le suivi radial de piste ainsi que la focalisation du rayonnement sur la piste, le noyau central (7) étant muni d'une gorge longitudinale (7') recevant au moins une partie de la tête optique (1), les bobines (2', 2", 3' ou 14, 15) étant combinées autour du noyau de manière à laisser un passage pour ladite tête, l'objectif de focalisation, le miroir de renvoi et les bobines étant solidaires les uns des autres de façon à former un ensemble compact.

2. Dispositif d'accès et d'asservissement selon la revendication 1, caractérisé en ce que les deux bobines (14, 15) sont disposées selon un arrangement symétrique, l'accès et le suivi radial souhaités étant obtenus par addition de forces (F, F') induites par des courants circulant dans les bobines.

3. Dispositif selon la revendication 2, caractérisé en ce que les conducteurs (15a, 14a) actifs des deux bobines sont perpendiculaires entre eux et forment un angle de 45° par rapport audit axe optique orthogonal.

4. Dispositif selon l'une quelconque des revendications 1 et 3, caractérisé en ce que les conducteurs des deux bobines sont bobinés sur une carcasse (11) cylindrique creuse de manière à se déplacer sur le noyau central (7) du circuit magnétique.

5. Dispositif d'accès et d'asservissement selon l'une quelconque des revendications 1 à 4, caractérisé en ce que l'ensemble compact est fixé à un dispositif de guidage (33) par l'intermédiaire des moyens (30, 30' et 32, 32') à deux degrés de liberté.

6. Dispositif selon la revendication 5, caractérisé en ce que les moyens à deux degrés de liberté sont consitués par au moins une lame élastique verticale (30, 30') fixée à l'ensemble mobile compact et par au moins une lame élastique horizontale (32, 32') reliant la première lame au dispositif de guidage.

7. Dispositif selon la revendication 5, caractérisé en ce que les moyens à deux degrés de liberté sont consitués par des lignes de moindre résistance pratiquées sur des lames rigides, au moins une lame rigide verticale avec deux lignes de moindre résistance horizontale (40a, 40b, 40'a, 40'b) fixée à l'ensemble mobile compact et au moins une lame rigide horizontale avec deux lignes de moindre résistance verticales (41a, 41b, 41'a, 41'b) reliant la première lame au dispositif de guidage.

8. Dispositif selon la revendication 5, caractérisé en ce que les moyens à deux degrés de liberté sont constitués par au moins une lame verticale (30, 30') fixée a l'ensemble mobile compact et une tige oscillante (8, 10) reliant la première lame à un système de guidage fixe (9a, 9b).

## Patentansprüche

1. Vorrichtung für den Zugriff auf und die Steuerung durch eine mittels eines gebündelten Strahls optisch les- und/oder schreibbare und auf einem Datenträger in regelmäßig oder variabel beabstandeten Windungen spiralförmig oder in konzentrischen Kreisbögen angeordnete Spur, wobei die besagte Vorrichtung einen mit seiner optischen Achse orthogonal zur Ebene des Datenträgers ausgerichteten optischen Kopf (1) aufweist, letzterer bestehend aus einem Fokussierungsobjektiv (4) und einem Umlenkspiegel (5), mindestens einem feststehenden magnetischen Kreis (21) mit einem die gesamten Windungen der Spur schneidenden Mittelkern (7) in dessen Spalten sich mindestens zwei Spulen (2, 3 oder 2', 2", 3' oder 14, 15) bewegen, die den Spurzugriff und die radiale Spurverfolgung sowie die Fokussierung des Strahls auf die Spur gewährleisten, wobei der Mittelkern (7) mit einer längsgerichteten Rille (7') zur Aufnahme von mindestens einem Teil des optischen Kopfes (1) versehen ist, und die Spulen (2', 2", 3' oder 14, 15) dergestalt um den Kern kombiniert angeordnet sind, daß ein Durchlaß für den besagten Kopf frei bleibt, wobei das Fokussierungsobjektiv, der Umlenkspiegel und die Spulen eine kompakte Einheit bildend miteinander verbunden sind.

2. Vorrichtung nach Anspruch 1 für den Zugriff auf und die Steuerung durch eine Datenträgerspur, dadurch gekennzeichnet, daß die beiden Spulen (14, 15) symmetrisch angeordnet sind, wobei der gewünschte Spurzugriff und die gewünschte radiale Spurverfolgung durch Addition der durch die in den Spulen fließenden Ströme induzierten Kräfte (F, F') erreicht werden.

3. Vorrichtung nach Anspruch 2, dadurch gekennzeichnet, daß die aktiven Leiter (15a, 14a) der beiden Spulen zueinander senkrecht und in einem 45°-Winkel zu der besagten orthogonalen optischen Achse angeordnet sind.

4. Vorrichtung nach einem beliebigen der Ansprüche 1 oder 3, dadurch gekennzeichnet, daß die Leiter der Spulen zwecks Verschiebung auf dem Mittelkern (7) des magnetischen Kreises auf einem zylindrischen Hohlrahmen (11) gewickelt sind.

5. Vorrichtung nach einem beliebigen der Ansprüche 1 bis 4 für den Zugriff auf und die Steuerung durch eine Datenträgerspur, dadurch gekennzeichnet, daß die kompakte Einheit an einer Führungsvorrichtung (33) mittels der Befestigungsmittel (30, 30' und 32, 32') mit zwei Freiheitsgraden befestigt ist.

6. Vorrichtung nach Anspruch 5, dadurch gekennzeichnet, daß die Befestigungsmittel mit zwei Freiheitsgraden aus mindestens einer senkrechten elastischen Zunge (30, 30'), die an der beweglichen kompakten Einheit befestigt ist, und mindestens einer waagerechten elastischen Zunge (32, 32'), die die erste Zunge mit der Führungsvorrichtung verbindet, bestehen.

7. Vorrichtung nach Anspruch 5, dadurch gekennzeichnet, daß die Befestigungsmittel mit zwei Freiheitsgraden aus in Starren Zungen eingearbeiteten Linien geringerer Festigkeit, nämlich aus mindestens einer senkrechten elastischen, an der beweglichen kompakten Einheit befestigten Zunge mit zwei Linien geringerer horizontaler Festigkeit (40a, 40b, 40'a, 40'b) und mindestens einer waagerechten elastischen, die erste Zunge mit der Führungsvorrichtung verbindende Zunge mit zwei Linien geringerer vertikaler Festigkeit (41a, 41b, 41'a, 41'b) bestehen.

8. Vorrichtung nach Anspruch 5, dadurch gekennzeichnet, daß die Befestigungsmittel mit zwei Freiheitsgraden aus mindestens einer senkrechten elastischen, an der beweglichen kompakten Einheit befestigten Zunge (30, 30') und einem schwingenden Stab (8, 10), der die erste Zunge mit einem feststehenden Führungssystem (9a, 9b) verbindet, bestehen.

## Claims

1. An access and tracking device for a track carried by a support of information optically readable and or recordable by a focused radiation, this track forming on the support turns regularly spaced or with a variable spacing, the turns forming a spiral or having the form of concentric circular elements, the said device comprising an optical head (1) the optical axis of which is orthogonal to the plane of the said support comprising a focusing objective lens (4) and a retroreflector mirror (5), at least a fix magnetic circuit (21) comprising a central core (7) secant to the whole of the track turns and in the gaps of which move at least two coils (2, 3 or 2', 3' or 14, 15) which enable carrying out respectively the access and the radial tracking of the track as well as the focusing of the radiation on the track, the central core (7) being provided with a longitudinal groove (7') which receives at least a part of the optical head (1) the coils (2', 2", 3' or 14, 15) being combined around the core in order to leave a passage for the said head, the focusing objective lens, the retroreflector mirror and the coils being solidly attached the ones to the others in such a way as to form a compact assembly.

2. Access and tracking device according to claim 1, characterised by the fact that the two coils (14, 15) are arranged according to a symmetrical arrangement, the access and the radial tracking desired being obtained by the addition of forces (F, F') induced by the currents which circulate in the coils.

3. Device according to claim 2, characterised by the fact that the two active conductors (15a, 14a) of the two coils are perpendicular one with respect to the other and make an angle of 45° with respect to the said orthogonal optical axis.

4. Device according to anyone of the claims 1 and 3, characterised by the fact that the conductors of the two coils are winded on a hollow cylindrical former (11), in such a way as to move on the central core (7) of the magnetic circuit.

5. Access and tracking device according to anyone of the claims 1 to 4, characterised by the fact that the compact assembly is fixed to a guidance device (33) through means (30, 30' and 32, 32') with two degrees of freedom.

6. Device according to claim 5, characterised by the fact that the means with two degrees of freedom are made up by at least a vertical elastic blade (30, 30') fixed to the moving compact assembly and by at least a horizontal elastic blade (32, 32') linking the first blade to the guidance device.

7. Device according to claim 5, characterised by the fact that the means with two degrees of freedom are made up by least resistance lines made on rigid blades, at least one vertical rigid blade with two horizontal least resistance lines (40a, 40b, 40'a, 40'b) fixed to the moving compact assembly, and at least one horizontal rigid blade with two vertical least resistance lines (41a, 41b, 41'a, 41'b) linking the first blade to the guidance device.

8. Device according to claim 5, characterised by the fact that the means with two degrees of freedom are made up by at least a vertical blade (30, 30') fixed to the moving compact assembly and an oscillating rod (8, 10) linking the first blade to a fix guidance system (9a, 9b).
